# EUROPÄISCHE PATENTSCHRIFT

(11) **EP 0 733 200 B1**
(45) Veröffentlichungstag und Bekanntmachung des Hinweises auf die Patenterteilung: **07.04.1999**
(21) Anmeldenummer: 95901260.0
(22) Anmeldetag: 30.11.1994
(51) Int. Cl.: G01M 3/22, B65D 90/50

(54) **LECKWARNSYSTEM**
LEAKAGE WARNING SYSTEM
DISPOSITIF AVERTISSEUR DE FUITES

(30) Priorität: 06.12.1993 AT 2468/93
(43) Veröffentlichungstag der Anmeldung: 25.09.1996
(73) Patentinhaber: Nemecek, Johann, 3040 Neulengbach (AT)
(72) Erfinder: NEMECEK, Johann, A-3040 Neulengbach (AT); PINTERICH, Hans, A-2402 Haslau a.d. Donau (AT); OSSINGER, Fritz, A-9020 Klagenfurt (AT)
(74) Vertreter: Patentanwälte BARGER, PISO & PARTNER
(86) Internationale Anmeldenummer: AT9400179
(87) Internationale Veröffentlichungsnummer: WO9516194

(56) Entgegenhaltungen:
- US-A- 4 896 528
- US-A- 5 048 324

## Beschreibung

Die Erfindung betrifft ein Leckwarnsystem an einem Behälter, insbesondere einem Lagertank für Mineralölprodukte.

Bei Lagertanks für Mineralölprodukte, speziell solchen mit einem Doppelboden, sind Leckanzeigevorrichtungen bekannt, mit Hilfe derer vor allem die Überwachung des Zwischenraumes zwischen Innen- und Außenboden hinsichtlich eines Eintrittes von Füllmedium des Behälters in diesen Zwischenraum erfolgt. Dabei lassen sich aber von vorneherein nicht so leicht Rückschlüsse darauf ziehen, ob beispielsweise neben durch Korrosion verursachte Undichtheiten des Innenbodens nicht auch noch Undichtheiten im Außenboden vorhanden sind, durch die z.B. gelagertes Mineralöl oder Benzin in den umgebenden Untergrund gelangen kann. Bei einbödigen Lagertanks, von welchen ja auch noch viele im Betrieb stehen, können die oben angeführten Leckanzeigevorrichtungen gar nicht angewendet.

Speziell bei einbödigen Lagertanks hat man auf der Innenseite des Bodens Korrosionsschutzüberzüge aufgebracht, um vor allem auf die Korrosionswirkung des Füllmediums zurückzuführende Undichtheiten wirksamer hintanzuhalten. Außerdem hat man zum Schutz des Untergrundes vor ausfließendem Füllmedium die Lagertanks in entsprechende Auffangwannen gestellt. All diese Schutzmaßnahmen umfassen aber nicht eine wirksame Überwachung der Dichtheit des Unterbodens, der meist ein außen ungeschützter, direkt auf einem Betonfundament aufruhender Metallboden ist.

Aufgabe der Erfindung ist nun die Schaffung eines Leckwarnsystems, mittels welchem auf einfache und wirksame Weise ein Austreten von Füllmedium, z. B. Mineralöle, Benzin oder dgl., durch einen undichten Unterboden eines Lagertanks in Bereiche zwischen Unterboden und Fundament ermittelt werden kann.

Das Leckwarnsystem gemäß der Erfindung ist nun dadurch gekennzeichnet, daß es eine über mindestens einer Öffnung im auf einem Fundament aufruhenden Unterboden des Behälters angeordnete, gegen das Behälterinnere ausgebuchtete, mit dem Unterboden dichtend verbundene Abdeckung umfaßt, wobei zwischen Unterboden und Fundament im unmittelbar an die Öffnung angrenzenden Bereich mindestens ein Distanzstück angeordnet ist, und daß es eine von der Abdeckung durch das Behälterinnere nach außen durch die Behälterwand geführte Gasleitung sowie ein an ihrem äußerem Ende angeschlossenes Gasmeßgerät umfaßt.

Wenn Füllmedium durch einen undichten Unterboden eines Lagertanks austritt, kann sich unverzüglich Gasphase des Füllmediums in dem von der Abdeckung über der im Unterboden vorgesehenen Öffnung umschlossenen Hohlraum sammeln und von dort über die Gasleitung nach außen zu dem Gasmeßgerät geführt bzw. gepumpt werden. Mit Hilfe der hochempfindlichen Gasmeßgeräte kann somit bereits in einem sehr frühen Stadium eine beispielsweise durch Korrosion aufgetretene Undichtheit des Unterbodens festgestellt werden.

Das erfindungsgemäße Leckwarnsystem hat zudem den Vorteil, daß es auch bei bereits aufgestellten und in Betrieb befindlichen Lagertanks nachträglich installierbar ist, nachdem das Füllmedium abgepumpt wurde.

Ein weiteres Merkmal der Erfindung bsteht darin, daß an die über der Öffnung im Unterboden angeordnete Abdeckung nach unten hin ein behälterartiger, mit Perforierungen versehener Unterteil angeschlossen ist, der vorzugsweise in eine im Fundament vorgesehene Vertiefung reicht, womit die Wirksamkeit des Sammeleffektes von vom Füllmedium herrührender Gasphase erhöht wird.

Gemäß einer Ausgestaltung der Erfindung ist die ausgebuchtete, einen Hohlraum umschließende Abdeckung zylinder-, quader-, kegel- oder kegelstumpfförmig oder vorzugsweise kugelkalotten- oder kuppelförmig. Die Abdeckung ist dabei erfindungsgemäß außen mit einem auf dem Unterboden aufliegenden Montagerand versehen. Solche Abdeckungen lassen sich auf sehr einfache und kostengünstige Weise herstellen und durch die Anordnung eines Montagerandes außenherum ist eine sichere und allseits dichte Befestigung der Abdeckung über der Öffnung an der Innenseite des Unterbodens, beispielsweise mittels Verschweißen, möglich.

Nach einem weiteren Merkmal der Erfindung ist neben der Gasleitung eine vom unteren Bereich des von der Abdeckung umschlossenen Hohlraumes durch das Behälterinnere nach außen durch die Behälterwand geführte Rohrleitung zur Abführung von Wasser vorgesehen. Damit ist es möglich, in einem mit dem Leckwarnsystem zwischen Unterboden und Fundament auftretendes Wasser, Kondens-, Regen- und/oder Grundwasser, laufend mittels Pumpe abzuziehen, womit eine zusätzliche Korrosionsminderung für den Unterboden erreicht wird.

Erfindungsgemäß sind bei Anordnung von mehreren mit Abdeckungen überdeckten Öffnungen im Unterboden die Abdeckungen über entsprechende Verbindungsleitungen untereinander verbunden, wobei jeweils eine Leitung für Gas und Wasser nach außen durch die Behälterwand geführt ist. Um eine möglichst rasche und sichere Erfassung von vom Füllmedium herrührender Gasphase zu gewährleisten , ist es vorteilhaft, mehrere Öffnungen im Unterboden mit zugehörigen Abdeckungen vorzusehen, die in konstruktiv einfacher Weise mit entsprechenden Verbindungsleitungen untereinander in Verbindung stehen. Dabei münden vorzugsweise die Verbindungsleitungen für Gas und gegebenenfalls für Wasser in jeweils eine nach außen durch den Behältermantel geführte Leitung.

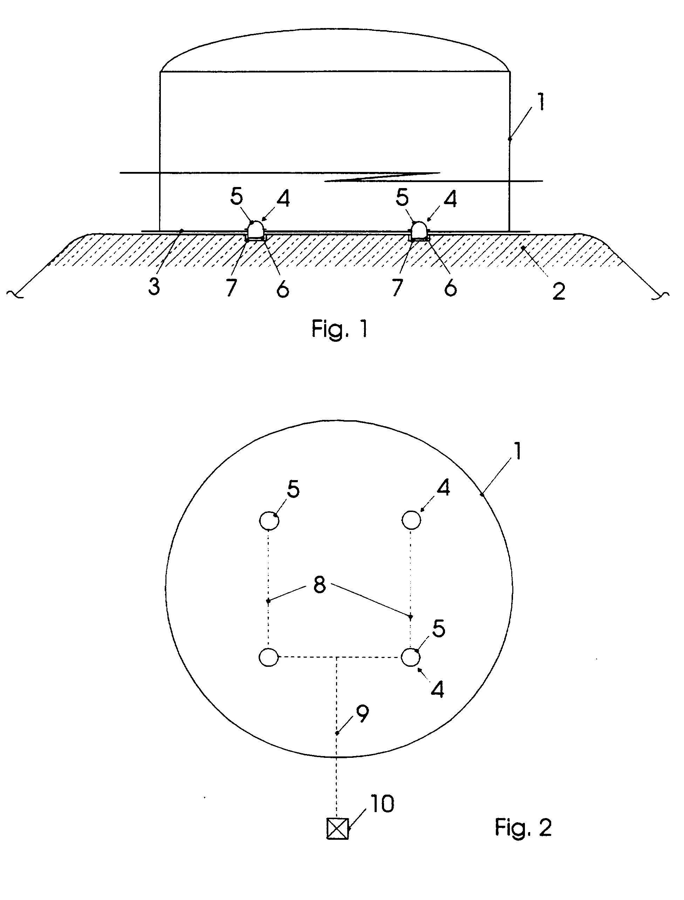

Der Gegenstand der Erfindung ist schematisch in der Zeichnung näher erläutert, worin Fig 1. eine Teilansicht eines Lagerbehälters mit einem erfindungsgemäßen Leckwarnsystem, Fig. 2 den Lagerbehälter mit erfindungsgemäßem Leckwarnsystem gemäß Fig. 1 in Draufsicht,

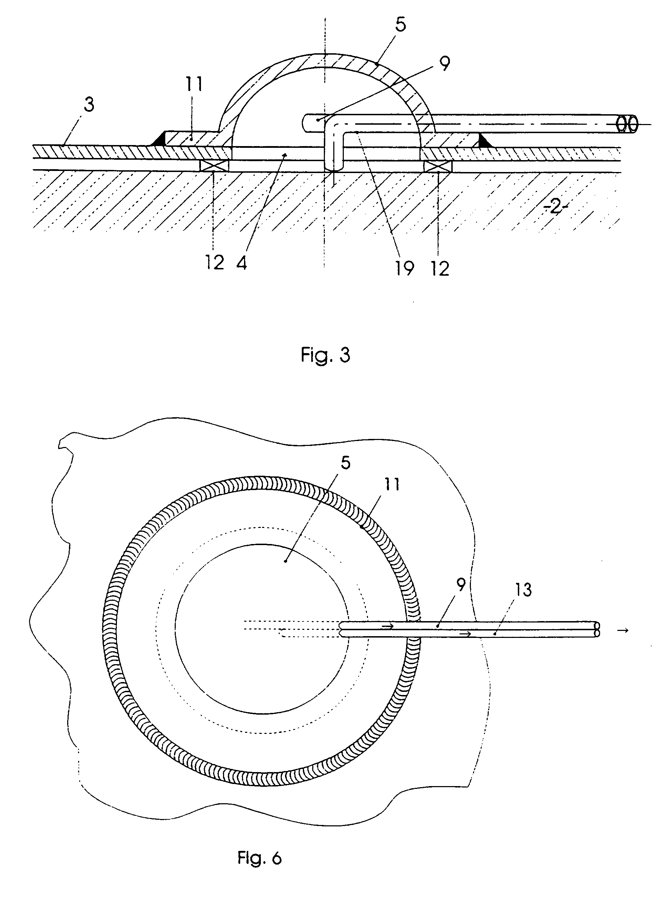

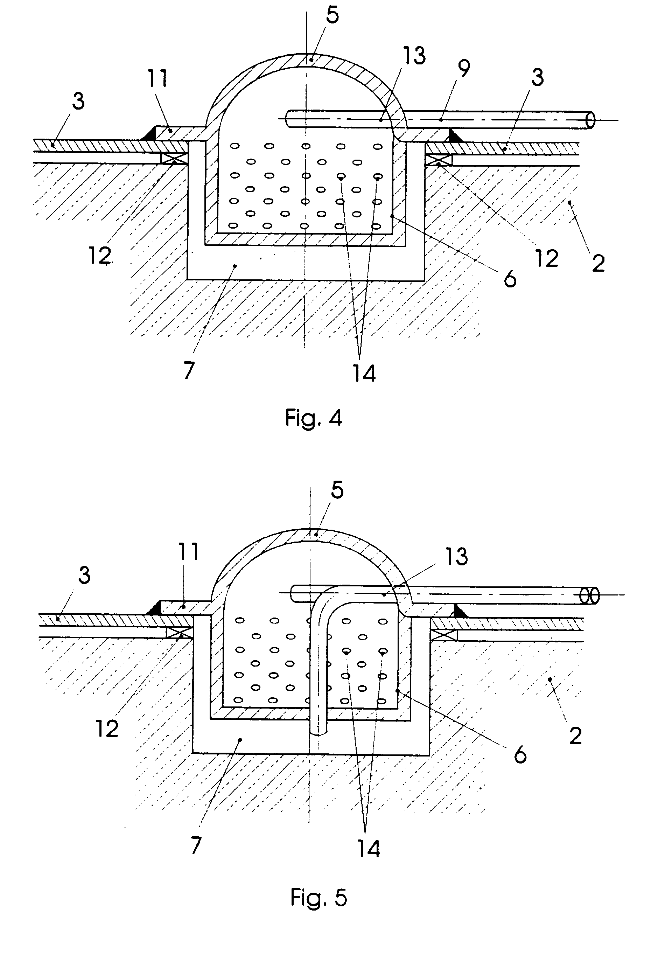

Fig.3 eine erste Ausführungsform eines Teiles des erfindungsgemäßen Leckwarnsystems in einer Schnittansicht, Fig. 4 eine zweite Ausführungsform eines Teiles des erfindungsgemäßen Leckwarnsystems in einer Schnittansicht, Fig. 5 eine dritte Ausführungsform eines Teiles des erfindungsgemäßen Leckwarnsystems in einer Schnittansicht und Fig. 6 einen Teil des erfindungsgemäßen Leckwarnsystems gemäß Fig. 5 im Grundriß zeigen.

Der Behälter 1 ruht wie in Fig. 1 dargestellt auf einem aus Beton bestehenden Fundament 2 auf. Im Unterboden 3 des Behälters 1 sind, wie auch aus Fig. 2 zu erkennen, Öffnungen 4 vorgesehen. Diese sind mit gegen das Behälterinnere ausgebuchteten Abdeckungen 5 überdeckt, an welche sich durch die Öffnungen 4 hindurch reichende behälterartige Unterteile 6 anschließen. Unterhalb des Bereiches der Öffnungen 4 im Unterboden 3 sind im Fundament 2 Vertiefungen 7 ausgebildet, in die die Unterteile 6 hineinragen.

Die die Öffnungen 4 im Unterboden 3 überdeckenden, jeweils einen Hohlraum umschließenden Abdeckungen 5 stehen untereinander mit einer Verbindungsleitung 8 in Verbindung, wobei von dieser eine Leitung 9 nach außen durch die Behälterwandung zu einem Gasmeßgerät 10 geführt ist. Natürlich kann auch nur eine mit einer entsprechenden Abdeckung überdeckte Öffnung im Unterboden des Behälters vorgesehen sein, von der die Gasleitung 9 dann direkt nach außen zum Gasmeßgerät 10 geführt ist, ebenso wie dies auch bei Anordnung von mehreren mit Abdeckungen überdeckten Öffnungen im Unterboden erfolgen kann.

Der Unterboden des aus Eisenblech hergestellten Behälters ruht auf dem aus Beton bestehenden Fundament direkt, allerdings immer in welliger Form auf, wobei es dabei Bereiche gibt, in denen der Unterboden tatsächlich satt auf dem Fundament aufliegt. Fig. 3 bis 6 zeigen jeweils den im Bereich des Unterbodens 3 des Lagerbehälters angeordneten Teiles des erfindungsgemäßen Leckwarnsystems. Gemäß Fig. 3 ist in dem über dem Fundament 2 angeordneten Unterboden 3 eine Öffnung 4 vorgesehen, die mit einer kuppelartigen Abdekkung 5 überdeckt ist. Die Abdeckung 5 ist außen herum mit einem Montagerand 11 versehen, an dem sie mit dem Unterboden durch Schweißung fest und dichtend verbunden ist. Unmittelbar im Umgebungsbereich der Öffnung 4 sind hier mehrere Distanzstücke 12 zwischen Unterboden 3 und Fundament 2 angeordnet, um in diesem Bereich jedenfalls ein sattes Aufliegen des Unterbodens auf dem Fundament zu verhindern. Die Abdeckung umschließt über der Öffnung 4 einen Hohlraum, in den die im Behälterinneren, vorzugsweise sich auf dem Unterboden abstützende, nach außen zum Gasmeßgerät 10 geführte Gasleitung 9 einmündet. Neben der Gasleitung 9 mündet auch noch eine, vorzugsweise parallel geführte Rohrleitung 13 zur Abführung von zwischen Unterboden 3 und Fundament 2 eingetretenem oder gebildetem Wasser mittels Pumpe nach außen ein. Um ein Eintreten von Wasser in die Gasleitung zu verhindern, kann das offene in den Abdeckungshohlraum reichende Ende der Gasleitung 9 mit einer wasserundurchlässigen, jedoch gasdurchlässigen Membran verschlossen werden.

Wenn nun beispielsweise durch eine korrosionsbedingte Undichtheit des Unterbodens 3 Füllmedium, z. B. Mineralöl oder Benzin, in den Bereich zwischen Unterboden 3 und Fundament 2 gelangt, kann sich vom Füllmedium herrührende Gasphase in dem über der Öffnung 4 im Unterboden von der Abdeckung 5 umschlossenen Hohlraum rasch sammeln und von dort über die Gasleitung 9 zum Gasmeßgerät 10 geführt werden. Bei Feststellung von Gasphase durch das Gasmeßgerät kann sofort Leckalarm gegeben und der Lagerbehälter außer Betrieb genommen und repariert werden. Die Anordnung von Distanzstücken im unmittelbaren Bereich der Öffnung zwischen Unterboden und Fundament gewährleistet jedenfalls, daß Gasphase ungehindert in den Abdeckungshohlraum einströmen kann, was nicht der Fall wäre, wenn gerade in diesem Bereich der Öffnung der Unterboden satt auf dem Fundament aufruhte.

Fig. 4 zeigt eine kuppelartige Abdeckung 5 mit einem auf dem Unterboden 3 aufliegenden und mit diesem verschweißten Montagerand 11 über der im Unterboden 3 vorgesehenen Öffnung 4. Zwischen Unterboden 3 und Fundament 2 sind wiederum Distanzstücke 12 angeordnet. Im Bereich unterhalb der Öffnung 4 im Unterboden 3 ist hier im Fundament 2 eine Vertiefung 7 vorgesehen, in die ein an die kuppelförmige Abdeckung 5 nach unten anschließender behälterartiger Unterteil 6 ragt. Der Unterteil weist Perforierungen 14 für den Durchtritt von Gasphase auf, die über die in den Abdeckungshohlraum einmündende Gasleitung 9 zum Gasmeßgerät geleitet wird.

Fig. 5 zeigt eine im wesentlichen gleiche Konstruktion wie Fig. 4, doch ist hier neben der Gasleitung 9 noch eine parallel zu dieser verlaufende Wasserableitung 13 angeordnet. Mittels Pumpe kann über diese in der Vertiefung 7 des Fundaments 2 sich sammelndes Wasser abgepumpt werden. Fig. 6 zeigt die mit dem Montagerand 11 versehene Abdeckung 5 gemäß Fig. 5 im Grundriß. Die in den von der Abdeckung 5 umschlossenen Hohlraum einmündenden Leitung(en) 9 für Gas und Leitung(en) 13 für Wasser sind hier vorzugsweise parallel nebeneinander geführt.

Die Montage des Leckwarnsystems erfolgt vorzugsweise in der Weise, daß im Unterboden eines Lagerbehälters ein oder mehrere Löcher gebohrt oder herausgeschnitten werden und gegebenenfalls eine Vertiefung im Bereich eines Loches im Fundament hergestellt wird. Danach wird eine vorgefertigte, gegebenenfalls mit einem perforierten behälterartigen Unterteil versehene Abdeckung ein Loch überdeckend auf dem Unterboden angeordnet und mit diesem, vorzugsweise am auf dem Unterboden aufliegenden Montagerand verschweißt. Sodann werden die Leitungen für Gas und Wasser verlegt, die zwischen einzelnen Abdeckungen oder nach außen durch entsprechende Öffnungen in der Behälterwand zum Gasmeßgerät bzw. Wasserpumpe führend im Behälterinneren am Unterboden sich auf diesem abstützend und/oder an diesem fixiert geführt sind. Nach Installation des Leckwarnsystems wird auf die Innenseite des Unterbodens ein Kunststoffüberzug, vorzugsweise aus einem Kunststofflaminat bestehend, aufgebracht, der vorteilhafterweise auch ein Stück nach oben auf der Behälterwand hochgezogen wird. Man erzielt hiermit nicht nur einen Korrosionsschutz für den Unterboden sondern auch eine entsprechende Fixierung der Gas- und Wasserleitungen.

## Patentansprüche

1. Leckwarnsystem an einem Behälter, insbesondere einem Lagertank für Mineralölprodukte, dadurch gekennzeichnet, daß es eine über mindestens einer Öffnung (4) im auf einem Fundament (2) aufruhenden Unterboden (3) des Behälters (1) angeordnete, gegen das Behälterinnere ausgebuchtete, mit dem Unterboden (3) dichtend verbundene Abdeckung (5) umfaßt, wobei zwischen Unterboden (3) und Fundament (2) im unmittelbar an die Öffnung (4) angrenzenden Bereich mindestens ein Distanzstück (12) angeordnet ist, und daß es eine von der Abdeckung (5)durch das Behälterinnere nach außen durch die Behälterwand geführte Gasleitung (9) sowie ein an ihrem äußerem Ende angeschlossenes Gasmeßgerät (10) umfaßt.

2. Leckwarnsystem nach Anspruch 1, dadurch gekennzeichnet, daß an die über der Öffnung (4) im Unterboden (3) angeordnete Abdeckung (5) nach unten hin ein behälterartiger, mit Perforierungen (14) versehener Unterteil (6) angeschlossen ist, der vorzugsweise in eine im Fundament (2) vorgesehene Vertiefung (7) reicht.

3. Leckwarnsystem nach einem der Ansprüche 1 oder 2, dadurch gekennzeichnet, daß die ausgebuchtete, einen Hohlraum umschließende Abdeckung (5) zylinder-, quader-, kegel- oder kegelstumpfförmig oder vorzugsweise kugelkalotten- oder kuppelförmig ist.

4. Leckwarnsystem nach Anspruch 3, dadurch gekennzeichnet, daß die Abdeckung (5) außen mit einem auf dem Unterboden (3) aufliegenden Montagerand (11) versehen ist.

5. Leckwarnsystem nach einem der Ansprüche 1 bis 4, dadurch gekennzeichnet, daß neben der Gasleitung (9) eine vom unteren Bereich des von der Abdeckung (5) umschlossenen Hohlraumes durch das Behälterinnere nach außen durch die Behälterwand geführte Rohrleitung (13) zur Abführung von Wasser vorgesehen ist.

6. Leckwarnsystem nach einem der Ansprüche 1 bis 5, dadurch gekennzeichnet, daß bei Anordnung von mehreren mit Abdeckungen (5) überdeckten Öffnungen (3) im Unterboden (3) die Abdeckungen (5) über entsprechende Verbindungsleitungen (8) untereinander verbunden sind, wobei jeweils eine Leitung (9,13) für Gas und Wasser nach außen durch die Behälterwand geführt ist.

## Claims

1. Leakage warning system in a container, particularly a storage tank for petroleum products, characterised in that it comprises a cover (5) sealingly connected with the base (3) arranged via at least one opening (4) in the floor (3) of the container (1) contacting a foundation (2), convex towards the interior of the container, wherein between base 3 and foundation (2) in the region directly adjacent the opening (4) is arranged at least one distance piece (12) and that it comprises a gas line (9) fed from the cover (5) through the interior of the container outwardly through the container wall as well as a gas measuring apparatus (10) connected to its outer end.

2. Leakage warning system according to Claim 1, characterised in that attached on the cover (5) arranged over the opening (4) in the base (3) downwardly thereof is a container-like underneath piece (6) provided with perforations (14) which preferably extends into a recess (7) provided in the foundation (2).

3. Leakage warning system according to one of Claims 1 or 2, characterised in that the convex cover (5) comprising a hollow space is cylindrical, cuboid, conical or frusto-conically shaped or preferably formed with a spherical cap or like a cupola.

4. Leakage warning system according to Claim 3, characterised in that the cover (5) is provided outwardly with a mounting rim (11) resting on the base (3).

5. Leakage warning system according to one of Claims 1 to 4, characterised in that as well as the gas line (9), there is provided a tubular line (13) for feeding water away guided from the lower region of the hollow space surrounded by the cover (5) through the interior of the container to the outside through the container wall.

6. Leakage warning system according to one of Claims 1 to 5, characterised in that with the arrangement of several openings (3) covered by covers (5) in the base (3), the covers (5) are connected to one another via corresponding connection lines (8), wherein, in each case, a line (9, 13) for gas and water is guided to the outside through the container wall.

## Revendications

1. Dispositif avertisseur de fuites sur un réservoir, notamment un réservoir de stockage pour produits pétroliers, **caractérisé en ce qu**'il comprend une calotte (5) reliée de façon étanche au plancher (3) par au moins une ouverture (4) dans le plancher (3) du réservoir (1) reposant sur une fondation (2) et courbée vers l'intérieur du réservoir, au moins une pièce d'écartement (12) étant placée entre le plancher (3) et la fondation (2) dans la partie directement adjacente à l'ouverture (4), **et en ce qu'**il comprend une conduite de gaz (9) menée depuis la calotte (5) à travers l'intérieur du réservoir vers l'extérieur au travers de la paroi du réservoir ainsi qu'un appareil de mesure de gaz (10) raccordé sur son extrémité extérieure.

2. Dispositif avertisseur de fuites selon la revendication 1, **caractérisé en ce qu'**une pièce inférieure (6) en forme de réservoir et munie de perforations (14) est raccordée vers le bas sur la calotte (5) placée au-dessus de l'ouverture (4) dans le plancher (3), cette pièce inférieure faisant saillie de préférence dans une cavité (7) prévue dans la fondation (2).

3. Dispositif avertisseur de fuites selon l'une des revendications 1 ou 2, **caractérisé en ce que** la calotte (5) courbée et enfermant un espace vide est en forme de cylindre, de parallélépipède, de cône ou de cône tronqué, ou de préférence en forme de calotte sphérique ou de dôme.

4. Dispositif avertisseur de fuites selon la revendication 3, **caractérisé en ce que** la calotte (5) est munie à l'extérieur d'un bord de montage (11) reposant sur le plancher (3).

5. Dispositif avertisseur de fuites selon l'une des revendications 1 à 4, **caractérisé en ce que,** outre la conduite de gaz (9), une conduite (13), menée depuis la partie inférieure de l'espace vide entouré par la calotte (5) à travers l'intérieur du réservoir pour traverser la paroi du réservoir vers l'extérieur, est prévue pour l'évacuation d'eau.

6. Dispositif avertisseur de fuites selon l'une des revendications 1 à 5, **caractérisé en ce que** lors de la disposition dans le plancher (3) de plusieurs ouvertures (4) recouvertes de calottes (5), les calottes sont raccordées entre elles à l'aide de conduites de raccordement (8) correspondantes, une canalisation (9, 13) pour le gaz et l'eau étant dirigée vers l'extérieur au travers de la paroi du réservoir
